# EUROPÄISCHE PATENTSCHRIFT

(11) **EP 3 954 499 B1**
(45) Veröffentlichungstag und Bekanntmachung des Hinweises auf die Patenterteilung: **08.06.2022**
(21) Anmeldenummer: 20190468.7
(22) Anmeldetag: 11.08.2020
(51) Int. Cl.: B23Q 11/00, B23Q 11/08

(54) **VORRICHTUNG UND VERFAHREN ZUR SPANENDEN BEARBEITUNG EINES WERKSTÜCKES**
DEVICE AND METHOD FOR MACHINING A WORKPIECE
DISPOSITIF ET PROCÉDÉ D'USINAGE PAR ENLÈVEMENT DE COPEAUX D'UNE PIÈCE

(43) Veröffentlichungstag der Anmeldung: 16.02.2022
(73) Patentinhaber: Butzer, Bernd, 32425 Minden (DE)
(72) Erfinder: Butzer, Bernd, 32425 Minden (DE)
(74) Vertreter: Dantz, Jan Henning

(56) Entgegenhaltungen:
- EP-A1- 1 704 959
- DE-A1- 3 733 534
- DE-A1-102008 060 236
- DE-A1-102012 007 344
- DE-A1-102015 206 131
- FR-A1- 2 386 362

## Beschreibung

Die vorliegende Erfindung betrifft eine Vorrichtung zur spanenden Bearbeitung eines Werkstückes mit einem rotierend antreibbaren Werkzeug an einem Werkzeugkopf, einer an dem Werkzeugkopf angeordneten Absaugvorrichtung, die ein um das Werkzeug angeordnete Haube umfasst, wobei an der Haube ein um das Werkzeug drehbares Mundstück angeordnet ist, über das bei einer spanenden Bearbeitung ein Partikelstrom einsaugbar ist, und ein Verfahren zur spanenden Bearbeitung eines Werkstückes.

Die EP 1 940 585 B1 offenbart eine Vorrichtung zur spanenden Bearbeitung von Werkstücken, bei der zum Absaugen der anfallenden Späne eine Haube auf das plattenförmige Werkstück aufgesetzt wird, um den Luftstrom in die Absaugleitungen zu lenken. Dieses Absaugen in vertikale Richtung nach oben erfordert große Rohrleitungen und hohe Strömungsgeschwindigkeiten, um bei einem Durchmesser der Haube von rund 40 cm ausreichend Ansaugleistung zu erzeugen, damit die anfallenden Späne abgesaugt werden können. Solche Absaugvorrichtungen erfordern daher viel Energie und führen zu einer hohen Lärmemission bei der Bearbeitung.

Die DE 10 2012 023 328 B3 offenbart eine Absaugvorrichtung zum Absaugen eines Partikelstromes, bei der ein Absaugmundstück sich um das Werkzeug bewegen kann, wobei zur Steuerung eine Sensoreinrichtung vorgesehen ist, mittels der die Partikelströmung optisch oder thermisch erfasst wird. Dadurch kann der Volumenstrom der Absaugvorrichtung reduziert werden, um den Partikelstrom gezielt einsaugen zu können. Allerdings besteht das Problem, dass die Positionierung des Mundstückes relativ träge bei einer Richtungsänderung des Werkzeuges ist und bei einer Richtungsänderung, beispielsweise in gegenläufige Richtung, es einige Zeit dauert, bis das Absaugmundstück an der neuen Absaugposition angeordnet ist. Gerade bei hohen Vorschubgeschwindigkeiten des Werkzeuges ist das Absaugen der Partikel daher unzureichend.

In der DE 10 2012 007 344 ist eine Absaugvorrichtung offenbart, bei der ein Absaugmundstück in dem vom Werkzeug aufgespannten Hüllvolumen angeordnet wird. Dadurch kann unmittelbar an dem Werkzeug ein Einsaugen erfolgen. Solche Absaugmundstücke können nicht größer sein als der Werkzeug-durchmesser und sind nur bei kleinen Fräswerkzeugen einsetzbar. Zudem besteht das Problem, dass bei Bearbeitung einer Seitenfläche eines plattenförmigen Werkstückes die Späne in Verfahrrichtung vorne und nicht hinten erzeugt werden. Gerade beim Aufteilen großformatiger Platten aus Holzwerkstoffen besteht der Bedarf an einer Absaugvorrichtung, die sowohl bei einer spanenden Bearbeitung innerhalb des Werkstückes als auch an einer Stirnkante des Werkstückes eingesetzt werden kann.

DE 10 2015 206 131 A1 offenbart ein Saugsystem für eine Bearbeitungsgruppe nach dem Oberbegriff des Anspruchs 1 zur Bearbeitung eines Werkstückes mit einem Werkzeug. Durch einen Späneförderer sollen durch das Werkzeug während der Bearbeitung ausgeworfenen Späne gefangen werden.

Es ist daher Aufgabe der vorliegenden Erfindung, eine Vorrichtung und ein Verfahren zur spanenden Bearbeitung eines Werkstückes zu schaffen, bei der eine verbesserte Absaugung des bei der spanenden Bearbeitung erzeugten Partikelstromes erfolgt.

Diese Aufgabe wird mit einer Vorrichtung mit den Merkmalen des Anspruches 1 und einem Verfahren mit den Merkmalen des Anspruches 13 gelöst.

Bei der erfindungsgemäßen Vorrichtung ist eine Absaugvorrichtung vorgesehen, die eine um das Werkzeug angeordnete Haube umfasst, an der ein um das Werkzeug drehbares Mundstück angeordnet ist, über das bei einer spanenden Bearbeitung ein Partikelstrom einsaugbar ist. Über die Haube wird ein Ansaugen von Luft von oben weitgehend vermieden, so dass das Mundstück einen Partikelstrom im Wesentlichen in eine radial Richtung der Haube einsaugen kann. Das Mundstück ist dabei um das Werkzeug drehbar angeordnet, insbesondere um 360° um eine durch eine Öffnung der Haube verlaufende Achse, so dass jeder Bewegungsrichtung des Werkzeuges eine vorbestimmte Position des Mundstückes zugeordnet werden kann. Dies erleichtert die Steuerung der Absaugvorrichtung, da die Bewegung des Werkzeuges über eine Steuerung einer Maschine erfolgt, die dann gleichzeitig auch die Bewegung des Mundstückes relativ zu dem Werkzeug und der Verfahrrichtung des Werkzeuges vornehmen kann. Dadurch lässt sich die Absaugvorrichtung auch bei einer Verfahrbewegung des Werkzeuges mit hoher Geschwindigkeit nutzen.

Vorzugsweise ist das Mundstück relativ zu einer Hauptfläche des Werkstückes bewegbar, beispielsweise in vertikale Richtung bei einer horizontal ausgerichteten Platte. Dadurch kann das Mundstück optimiert positioniert werden, je nachdem, ob das Werkzeug die Hauptfläche einer großformatigen Platte bearbeitet oder eine äußere Seitenfläche der Platte. Bei der Bearbeitung einer Seitenfläche kann das Mundstück tiefer positioniert werden, also auf Höhe der Seitenfläche und optional auch in Verfahrrichtung vor dem Werkzeug, so dass der Partikelstrom optimiert eingesaugt werden kann. Bei einer Bearbeitung in der Hauptfläche des meist plattenförmigen Werkstückes kann das Mundstück oberhalb des Werkstückes angeordnet werden, um dann den Partikelstrom unmittelbar oberhalb und oder innerhalb der vom Werkzeug erzeugten Ausnehmung des Werkstückes einzusaugen. Dies ermöglicht eine günstige Positionierung des Mundstückes relativ zu dem Werkzeug, je nachdem, wo die spanende Bearbeitung an dem Werkstück stattfindet.

In der erfindungsgemäßen Ausgestaltung ist eine Oberseite der Haube durch ein an dem Werkzeugkopf gehaltenes Abdeckelement verschlossen. Über das Abdeckelement wird ein Ansaugen von Luft von der Oberseite der Haube vermieden oder reduziert, so dass das Ansaugen gezielter auf den Partikelstrom ausgerichtet werden kann. Zudem bildet das Abdeckelement einen Prallschutz aus. Das Abdeckelement kann dabei wahlweise drehfest am Werkzeugkopf oder relativ zu dem Werkzeugkopf drehbar gelagert sein.

Die Haube um das Werkzeug weist vorzugsweise eine innere Hülle und eine äußere Hülle auf, zwischen denen ein Ansaugkanal ausgebildet ist. An diesem ringförmigen Ansaugkanal ist vorzugsweise das Mundstück angeschlossen. Das Mundstück ist bevorzugt an der inneren Hülle oder der äußeren Hülle drehbar gehalten. Dadurch lässt sich das Mundstück innerhalb der äußeren Umhüllung drehen, ohne dass beim Drehvorgang Saugverluste entstehen.

Vorzugsweise sind die innere Hülle und die äußere Hülle in vertikale Richtung relativ zu dem Abdeckelement bewegbar. Das Abdeckelement kann an dem Werkzeugkopf gehalten und optional über ein Drehlager zusammen mit der inneren Hülle gedreht werden. An dem beispielsweise scheibenförmigen Abdeckelement können dann eine oder mehrere Führungsstangen vorgesehen sein, um eine vertikale Bewegung der inneren Hülle relativ zu dem Abdeckelement zu ermöglichen. Die innere Hülle weist vorzugsweise einen Wandabschnitt auf, der in einer ersten Position nach oben über das Abdeckelement hervorsteht und dann beim Absenken der inneren Hülse relativ zu dem Abdeckelement nach unten bewegt wird, um über den Wandabschnitt eine weitgehende Abdichtung der Haube an dem Übergang zwischen dem oberen Abdeckelement und der inneren Hülse zu gewährleisten.

Zwischen der inneren Hülle und der äußeren Hülle ist vorzugsweise ein Drehlager vorgesehen, insbesondere ein Axiallager, so dass die äußere Hülle drehfest angeordnet werden kann, was den Anschluss einer Saugleitung an die äußere Hülle erleichtert. An dem Drehlager, insbesondere dem Axiallager, kann ein unterer Ring der inneren Hülle abgestützt sein, der zwischen der inneren

Hülle und der äußeren Hülle angeordnet ist und an dem das Mundstück gehalten ist. Im Bereich des Mundstückes ist ein Strömungsdurchgang zwischen dem Mundstück und dem ringförmigen Ansaugkanal zwischen der inneren Hülle und der äußeren Hülle gebildet.

Das Mundstück weist vorzugsweise eine zu dem Werkzeug gerichtete Einsaugöffnung auf und ist vorzugsweise auswechselbar angeordnet, beispielsweise über einen Schnellverschluss an einem Ring zwischen der inneren Hülle und der äußeren Hülle. Dadurch können unterschiedliche Mundstücke je nach Werkzeug und Bearbeitung eingesetzt werden, die in Größe und Form voneinander abweichen. Über das jeweilige Mundstück kann der radiale oder horizontale Abstand zwischen dem Werkzeug und der Einsaugöffnung des Mundstückes verändert werden. Bei einer flächigen Trenn-Bearbeitung im Nestingverfahren kann das Mundstück beispielsweise ganz oder teilweise in dem hergestellten Kanal oder die Aussparung eintauchen, also zumindest teilweise unterhalb der Oberseite eines plattenförmigen Werkstückes angeordnet werden, wobei ein kleineres Mundstück vorteilhaft ist. Bei einer Seitenflächenbearbeitung von Platten ist das Mundstück auf Höhe der Seitenfläche angeordnet und kann eine optimierte Prallfläche aufweisen. Daher ist ein Wechseln des Mundstückes für verschiedene Bearbeitungsvorgänge vorteilhaft.

In einer weiteren Ausgestaltung der Vorrichtung ist an der Haube eine Ausblasdüse vorgesehen, mittels der ein Luftstrom zu dem Werkzeug hin einblasbar ist. Dadurch kann das Absaugen des Partikelstromes weiter verbessert werden, indem eine zielgerichtete Strömung zu dem Werkzeug hin gerichtet wird, von der dann der Partikelstrom zusammen mit der eingeblasenen Luft über das Mundstück eingesaugt wird. Die Düse kann dann Späne die auf einem Tisch oder in einer Ausnehmung des Werkstückes über den Saugstrom an dem Mundstück nicht erfasst wurden aufwirbeln, so dass sie dann vom Saugstrom erfasst werden. Die Düsen soll die Partikel über den Luftstrom abheben lassen, damit der Partikelstrom besser vom Saugstrom erfasst wird. Die Düse ist bevorzugt in der Nähe des Mundstückes angeordnet, beispielsweise in Werkzeugrichtung betrachtet mittig vor dem Mundstück, direkt an dem Mundstück oder an einem mit dem Mundstück rotierenden Ring in der Nähe des Mundstückes. Hierzu kann eine Drehverteilung für Druckluft vorgesehen sein, die an der Innenseite der äußeren Hülle angebracht sein kann.

Bei dem erfindungsgemäßen Verfahren zur spanenden Bearbeitung eines Werkstückes wird ein Mundstück oberhalb des plattenförmigen Werkstückes positioniert, um die durch die spanende Bearbeitung anfallenden Partikel abzusaugen. Das Mundstück kann bei einer Bewegung des Werkstückes abhängig von der Bewegungsrichtung des Werkzeuges gedreht werden, so dass es dem Werkzeug nachlaufend oder vorlaufend angeordnet werden kann, wobei die Parameter zur Steuerung des Mundstückes fest in einem Programm vorgegeben werden. Es ist nicht notwendig, eine optische oder thermische Erfassung des Partikelstromes über Sensoren vorzunehmen.

Das Mundstück kann dabei von einer Position oberhalb einer Oberseite des Werkstückes in vertikale Richtung bewegt werden, um das Mundstück neben eine Seitenfläche eines plattenförmigen Werkstückes zu bewegen, um den Partikelstrom beim spanenden Bearbeiten der Stirnseite des Werkstückes über das Mundstück einsaugen zu können. Nach der Bearbeitung der Seitenfläche kann das Mundstück wieder in vertikale Richtung oberhalb des Werkstückes bewegt werden, je nachdem, welcher Bearbeitungsvorgang durch das Werkzeug erfolgen soll. Diese vertikale Bewegung des Mundstückes optimiert die Absaugung des Partikelstromes und führt zu einer flexiblen Gestaltung des Absaugprozesses, der auch bei vergleichsweise geringen Volumenströmen eine effektive Absaugung ermöglicht.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht einer erfindungsgemäßen Vorrichtung;
- Figur 2: eine Schnittansicht einer möglichen Ausführung der Vorrichtung der Figur 1;
- Figur 3: eine schematische Schnittansicht der Vorrichtung der Figur 2 mit un-terschiedlichen Positionen des Mundstückes;
- Figur 4: eine schematische Draufsicht auf die Anordnung des Mundstückes während einer Bearbeitung in dem Werkstück;
- Figur 5: eine schematische Schnittansicht der Vorrichtung der Figur 2 bei einer Bearbeitung einer Stirnseite eines Werkstückes;
- Figur 6: eine schematische Ansicht zur Anordnung des Mundstückes bei der Bearbeitung gemäß Figur 5;
- Figur 7: eine schematische Schnittansicht gemäß einem weiteren Ausfüh-rungsbeispiel einer erfindungsgemäßen Vorrichtung;
- Figur 8: eine schematische Schnittansicht der Vorrichtung der Figur 2 mit An-triebsvorrichtung, und
- Figur 9: eine perspektivische Ansicht der Vorrichtung der Figur 8.

Eine Vorrichtung 1 zur spanenden Bearbeitung eines Werkstückes, insbesondere eines plattenförmigen Werkstückes aus einem Holzwerkstoff, Kunststoff oder Metall, umfasst ein Werkzeug 2, das als Fräswerkzeug ausgebildet ist, aber auch als Bohrer, Säge oder anderes spanendes Werkzeug ausgestaltet sein kann.

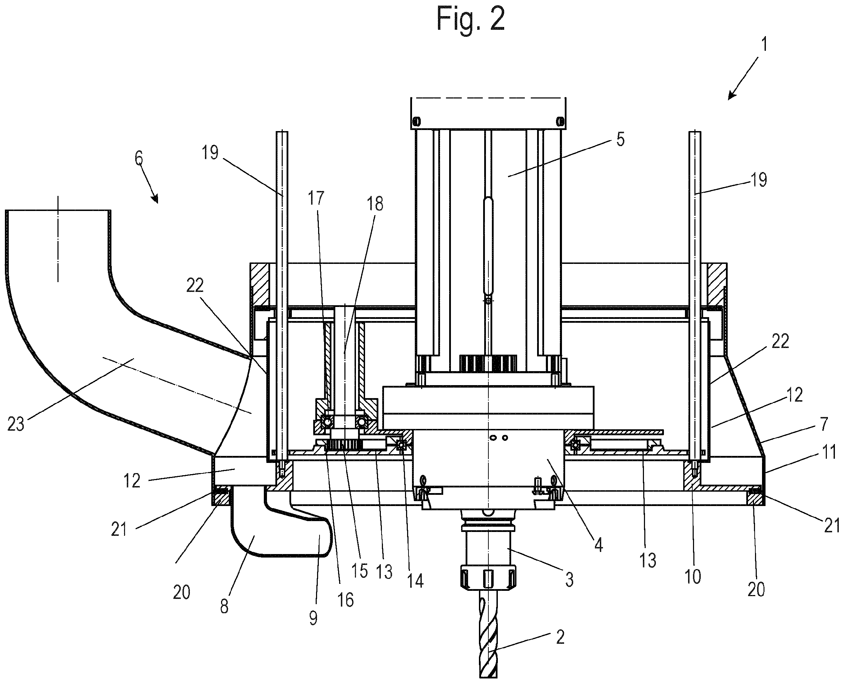

Das Werkzeug 2 ist an einer Werkzeughalterung 3 auswechselbar gehalten, wobei die Werkzeughalterung 3 an einem Werkzeugkopf 4 montiert ist, wie dies aus der Schnittansicht der Figur 2 hervorgeht.

An dem Werkzeugkopf 4 ist eine Antriebsvorrichtung 5 angeschlossen, beispielsweise eine Elektrospindel, um das Werkzeug 2 rotierend antreiben zu können. Die Antriebsvorrichtung 5 mit dem Werkzeug 2 kann über einen Schlitten in axiale Richtung bewegt werden.

Die Vorrichtung 1 umfasst ferner eine Absaugvorrichtung 6, die eine um das Werkzeug 2 angeordnete Haube 7 umfasst. An der Haube 7 ist ein Mundstück 8 angeordnet, das eine zu dem Werkzeug 2 gerichtete Einsaugöffnung 9 aufweist. Das Mundstück 8 ist dabei um das Werkzeug 2 drehbar angeordnet, insbesondere um eine koaxial zu dem Werkzeug 2 angeordnete ringförmige Bewegungsbahn, wie dies durch die Pfeile dargestellt wird. Zudem ist die Haube 7 relativ zu dem Werkzeug 2 in koaxialer Richtung bewegbar angeordnet.

Wie in Figur 2 gezeigt ist, umfasst die Haube 7 eine innere Hülle 10 mit einem zylinderförmigen Wandelement 22 und eine äußere Hülle 11, zwischen denen ein Ansaugkanal 12 ausgebildet ist. An den ringförmigen Ansaugkanal 12 ist eine Absaugleitung 23 angeschlossen, die einen Partikelstrom über das Mundstück 8 und den Ansaugkanal 12 einsaugt. Bei der Absaugvorrichtung 6 sind die innere Hülle 10 und die äußere Hülle 11 vorzugsweise konzentrisch um den Werkzeugkopf 4 angeordnet.

Die Haube 7 ist im Bereich des Werkzeugkopfes 4 im Wesentlichen geschlossen ausgebildet. Hierfür ist ein scheibenförmiges oberes Abdeckelement 13 vorgesehen, das eine Verbindung zwischen der inneren Hülle 10 und dem Werkzeugkopf 4 herstellt. Dabei ist zwischen dem Werkzeugkopf 4 und dem Abdeckelement 13 ein Drehlager 14 angeordnet, so dass das Abdeckelement 13 um den Werkzeugkopf 4 drehbar ist. Das Abdeckelement 13 ist dabei in axialer Richtung stationär an dem Werkzeugkopf 4 fixiert, kann aber über eine Antriebsvorrichtung gedreht werden. Die Antriebsvorrichtung umfasst eine Antriebswelle 18, die über ein Lager 17 drehbar in einer Aufnahme gehalten ist und über ein Zahnrad 15 oder ein Reibrad einen Zahnring 16 oder einen Reibring antreibt, um das Abdeckelement 13 und damit das Mundstück 8 zu drehen. Alternativ kann als Antriebsvorrichtung auch ein Torquemotor eingesetzt werden, der einen rotierenden Direktantrieb für das Mundstück 8 bilden kann.

An dem Abdeckelement 13 sind mehrere vertikale Führungsstangen 19 vorgesehen, an denen die innere Hülle 10 gehalten ist, wobei die Führungsstangen 19 über einen nicht näher dargestellten Antrieb in vertikale Richtung bewegbar sind. An den Führungsstangen 19 ist die innere Hülle 10 mit dem Wandelement 22 gehalten. An der Hülle 10 ist ein integral nach außen hervorstehender Ring ausgebildet, der den Ansaugkanal 12 an einer Unterseite verschließt. Optional kann der Ring auch als separates Bauteil an der inneren Hülle 10 festgelegt sein. An dem radial nach außen hervorstehenden Ring der inneren Hülle 10 ist das Mundstück 8 gehalten, an dem ein Durchgang von der Einsaugöffnung 9 zu dem Ansaugkanal 12 ausgebildet ist. Somit kann durch Drehen der inneren Hülle 10 die Einsaugöffnung 9 um das Werkzeug 2 herum beliebig positioniert werden.

Das Mundstück 8 könnte alternativ auch so geformt und angebracht werden, dass es eine Öffnung in dem nach unten verlängerten Wandelement 22 bildet.

Der nach außen hervorstehende Ring an der inneren Hülle 10 ist drehbar an der äußeren Hülle 11 gehalten, die zwar koaxial bewegbar, aber in Drehrichtung stationär angeordnet ist. An einem nach innen vorstehenden ringförmigen Halter 20 ist ein Axiallager 21 ausgebildet, so dass der radial nach außen hervorstehende Ring an der inneren Hülle 10 an dem Axiallager 21 abgestützt und drehbar gelagert ist. Die Antriebsvorrichtung zum axialen Bewegen der inneren Hülle 10 und der äußeren Hülle 11 kann an der äußeren Hülle 11 angreifen, die über das Axiallager 21 die innere Hülle 10 anhebt oder absenkt.

An der inneren Hülle 10 ist das zylindrische Wandelement 22 ausgebildet, das in der in Figur 2 dargestellten Position über das Abdeckelement 13 nach oben hervorsteht. Werden die innere Hülle 10 und die äußeren Hülle 11 in vertikale Richtung abgesenkt, bewegen sich die Führungsstangen 19 und das Wandelement 22 nach unten, wobei das Wandelement 22 weitgehend eine Abdichtung zu dem Abdeckelement 13 gewährleistet, das zwar zusammen mit der inneren Hülle 10 drehbar ist, aber in vertikale Richtung stationär an dem Werkzeugkopf 4 gehalten ist. Optional kann zwischen dem Abdeckelement 13 und dem Wandelement 22 auch eine elastische Dichtung vorgesehen sein.

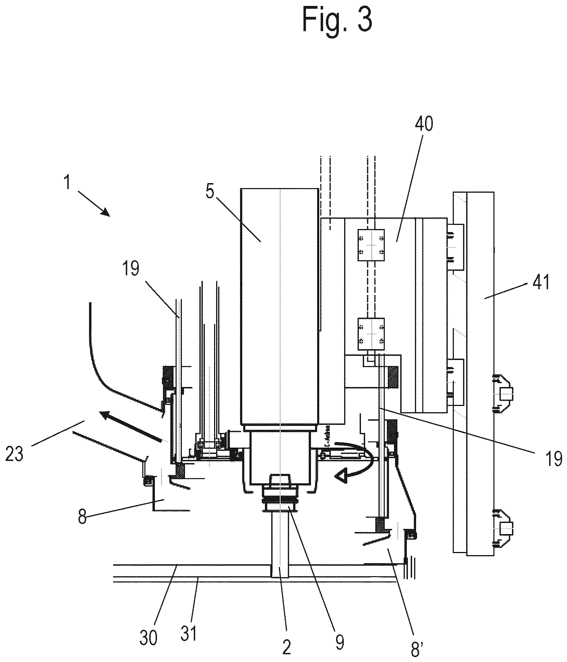

In Figur 3 ist die Vorrichtung 1 in schematischer Ansicht gezeigt, wobei das Werkzeug 2 im inneren Bereich eines plattenförmigen Werkstückes 30 eine Fräsung vornimmt. Das plattenförmige Werkstück 30 ist dabei vollflächig auf einem Maschinentisch mit einer Opferunterlage zur überwiegenden flächigen Bearbeitung angeordnet. Es kann aber auch auf andere Maschinentische fixiert werden.

Die Haube 7 samt Mundstück 8 kann von einer oberen Position, wie sie links in Figur 3 gezeigt ist, in eine Position kurz oberhalb des Werkstückes 30 gemäß dem Mundstück 8', wie es auf der rechten Seite der Figur 3 eingezeichnet ist, bewegt werden. Das Absenken der Haube 7 des Mundstückes 8 erfolgt in Führungsleisten die mit einem relativ zu der Haube 7 bewegbaren Schlitten 40 verbunden sein können. Der Schlitten 40 ist an einem Werkzeugträger 41 gehalten. Durch Absenken des Schlittens 40 werden auch die innere Hülle 10 und das Mundstück 8 abgesenkt, wobei an dem Schlitten 40 auch der Werkzeugkopf 4 und das Werkzeug 2 gehalten sind. Die Haube 7 wird über Führungsleisten und einen nicht dargestellten Antrieb, beispielsweise einen Kugelgewindetrieb, samt Motor auf dem Schlitten 40 angebracht bewegt.

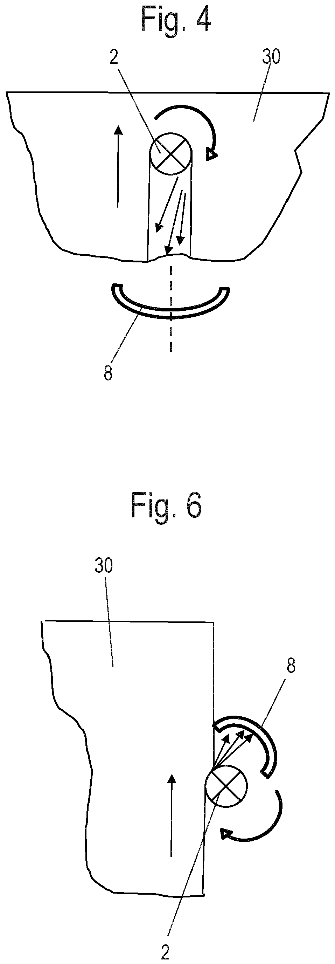

In Figur 4 ist eine Bewegung des Werkzeuges 2 bei einem Fräsvorgang innerhalb der Hauptfläche des Werkstückes 30 schematisch dargestellt. Das Werkzeug 2 bewegt sich in Pfeilrichtung nach oben in Figur 4, und das Mundstück 8 ist zwar oberhalb des Werkstückes 30 angeordnet, aber in Verfahrrichtung kurz hinter des Werkzeuges 2, so dass die durch Pfeile dargestellten abgefrästen Partikel durch das Mundstück 8 eingesaugt werden können. Wird das Werkzeug 2 nun in eine andere Richtung bewegt, beispielsweise nach links, kann das Mundstück um 90° verfahren werden und auf der rechten Seite des Werkzeugs 2 angeordnet werden. Dies kann simultan bei Änderung der Bewegungsrichtung des Werkzeuges 2 erfolgen, um den Partikelstrom möglichst effektiv absaugen zu können.

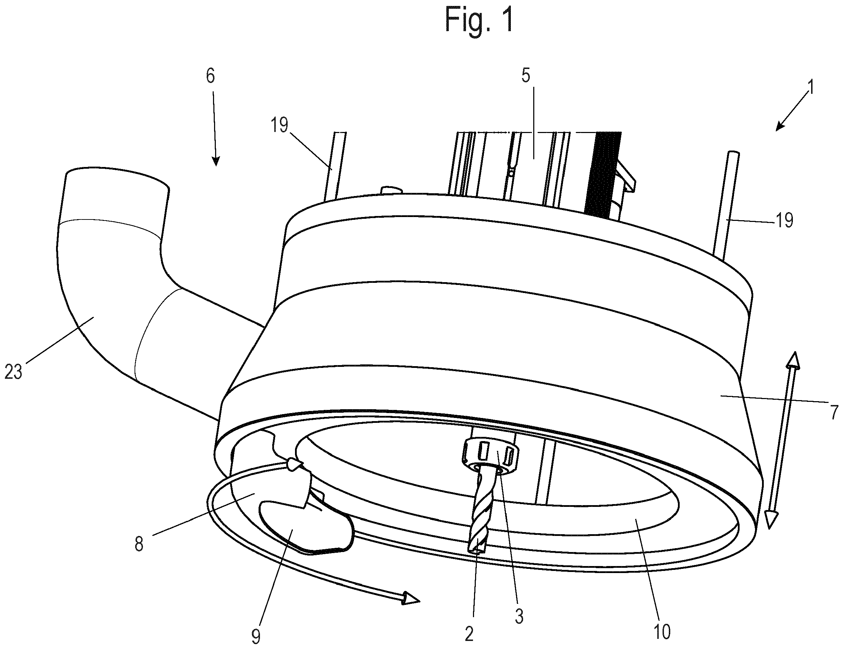

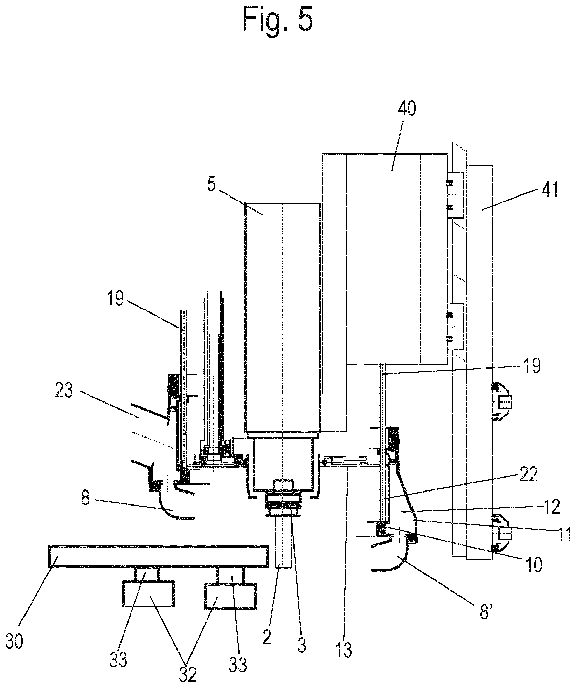

In Figur 5 ist die Vorrichtung 1 der Figur 1 in einer anderen Position gezeigt, bei der das Werkzeug 2 an einer Seitenfläche des plattenförmigen Werkstückes 30 angeordnet ist, das auf Haltern 32 und Auflagen 33 abgestützt ist. Bei der Bearbeitung einer Seitenfläche des plattenförmigen Werkstückes 30 wird das Mundstück 8 von der in Figur 5 dargestellten linken Position zu dem Mundstück 8' bewegt, das in Figur 5 auf der rechten Seite angeordnet ist. Das Mundstück 8 wurde um das Werkzeug 2 um die vertikale Achse gedreht und zusätzlich in vertikale Richtung abgesenkt, so dass nun das Mundstück 8' mit der Einsaugöffnung 9 etwa auf der gleichen Höhe wie die Seitenfläche des Werkstückes 30 angeordnet ist.

In Figur 6 ist schematisch die Bearbeitung einer Seitenfläche des Werkstückes 30 durch das Werkzeug 2 gezeigt. Anders als bei einer Bearbeitung innerhalb eines Werkstückes gemäß Figur 4 wird der Partikelstrom an spänen nicht dem Werkzeug 2 nachfolgend erzeugt, sondern vor dem Werkzeug 2. Dadurch ist es vorteilhaft, wenn das Mundstück 8 in der dargestellten Position angeordnet wird, also neben der Stirnkante des Werkstückes 30 und in Bewegungsrichtung vor dem Werkzeug 2. Dies ermöglicht ein Einsaugen von Spänen, die bei der Bearbeitung der Stirnkante von dem Werkstück 30 abgetragen werden.

Das Mundstück 8 kann somit programmgesteuert relativ zu dem Werkzeug 2 bewegt werden, je nachdem, ob das Werkzeug 2 im Innenbereich des Werkstückes 30 eine Fräsung einbringt oder eine Seitenfläche bearbeitet.

Für eine optimale Funktion des Absaugens können unterschiedliche Mundstücke 8 verwendet werden, abhängig von der Art der Bearbeitung, beispielweise ein Mundstück für eine flächige Bearbeitung auf einer Maschine mit vollflächigem Tisch mit Opferunterlage (Nestingverfahren gemäß Figur 3) und ein anderes Mundstück für eine Einzel-Platten-Bearbeitung auf einer Maschine mit einem Konsolentisch, bei der die Werkstücke meist vorformatiert sind und nur die Seitenflächen bearbeitet werden, wie dies in Figur 5 gezeigt ist. Die unterschiedlichen Bearbeitungen können aber auch ohne Auswechseln des Mundstückes 8 durchgeführt werden.

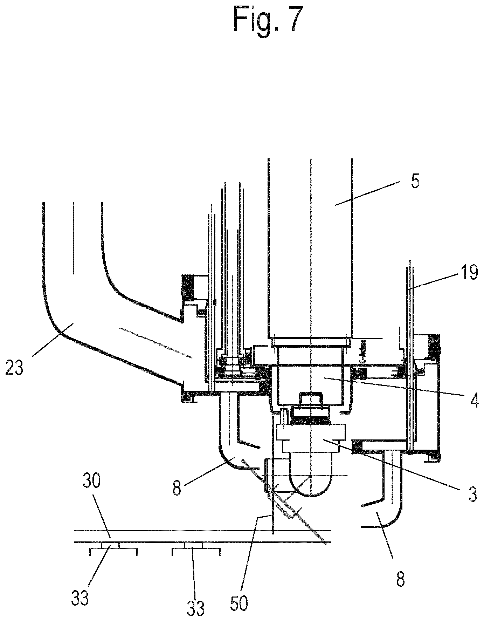

In Figur 7 ist eine weitere Ausgestaltung der Vorrichtung 1 gezeigt, bei der statt einem Fräswerkzeug eine Säge 50 vorgesehen ist. Die rotierende Säge ist um eine horizontale Achse drehbar, die an einer winkelförmigen Werkzeughalterung 3 angeordnet ist. Die Säge 50 kann das Werkstück 30 schneiden, wobei das Mundstück 8 auch hier abhängig von dem durch die Säge 50 anfallenden Partikelstrom positioniert werden kann.

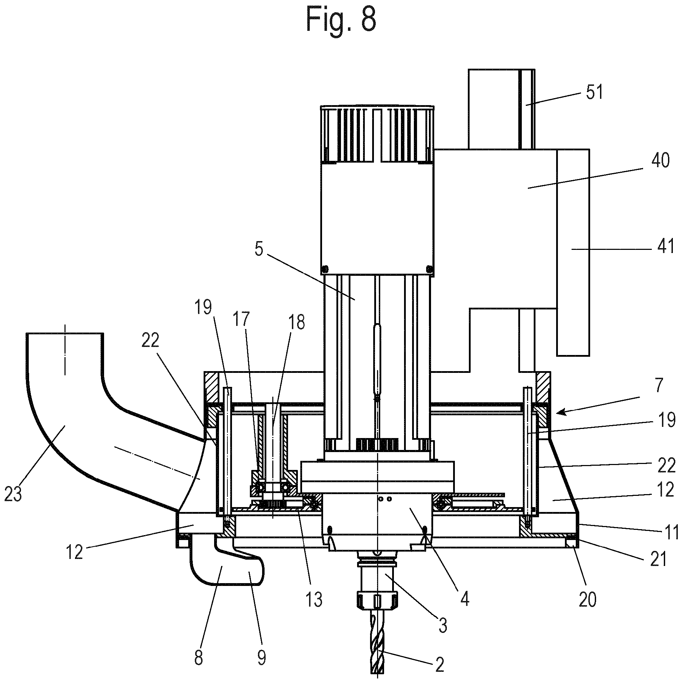

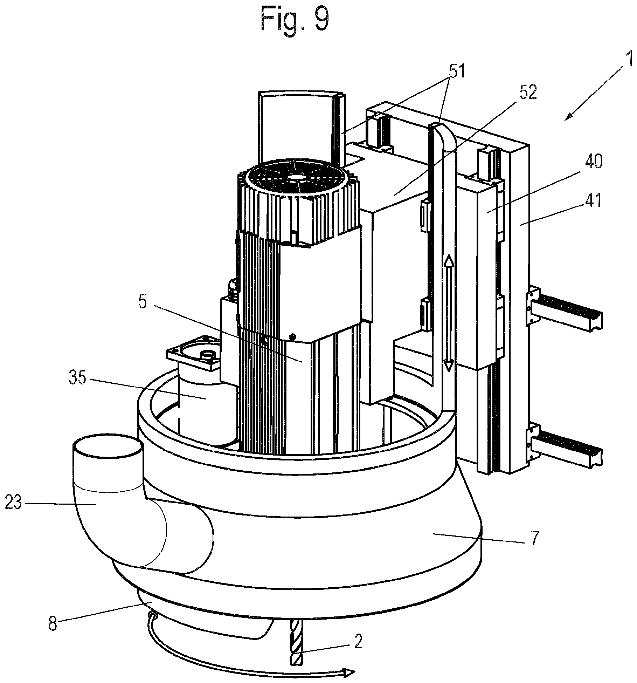

In den Figuren 8 und 9 ist ergänzend zu Figur 2 auch die Antriebsvorrichtung 5 gezeigt, die an dem Schlitten 40 verfahrbar gehalten ist. Hierfür ist der Schlitten 40 an dem Werkzeugträger 41 verfahrbar gehalten. Um die Haube 7 in axiale Richtung relativ zu dem Schlitten 40 verfahren zu können, sind Führungsleisten 51 an dem Schlitten 40 verfahrbar, an denen die Haube 7 gehalten ist. Dadurch kann die Haube 7 auch relativ zu dem Werkzeugkopf 4 in axiale Richtung bewegt werden. Die axiale Richtung ist hier die vertikale Richtung, kann aber je nach Bauweise auch eine andere Richtung im Raum sein.

An der Haube 7 ist ein Motor 35 zum Drehen des Mundstückes 8 mit der inneren Hülle 10 und dem Wandelement 22 vorgesehen.

In dem dargestellten Ausführungsbeispiel ist nur ein Mundstück 8 für die Absaugvorrichtung 6 vorgesehen, wobei es auch möglich ist, mehrere Saugstücke 8 an der inneren Hülle 10 anzuordnen.

An jedem Mundstück 8 kann optional auch eine hervorstehende Prallfläche vorgesehen sein, die verhindert, dass Partikel radial aus der zylindrischen äußeren Hülle herausgeschleudert werden. Zudem können an der Unterseite des Mundstückes 8 und an der Haube 7 elastische Dichtelemente oder andere Leitelemente vorgesehen sein, um das Absaugen des Partikelstromes zu optimieren.

In einem nicht dargestellten Ausführungsbeispiel kann das Mundstück 8 über eine vertikalen Hubmechanik verfügen, mittels der das Mundstück 8 ganz oder teilweise in den Ansaugkanal 11 der Haube 7 eingefügt werden kann.

### Bezugszeichenliste

- 1: Vorrichtung
- 2: Werkzeug
- 3: Werkzeughalterung
- 4: Werkzeugkopf
- 5: Antriebsvorrichtung
- 6: Absaugvorrichtung
- 7: Haube
- 8, 8': Mundstück
- 9: Einsaugöffnung
- 10: innere Hülle
- 11: äußere Hülle
- 12: Ansaugkanal
- 13: Abdeckelement
- 14: Drehlager
- 15: Zahnrad
- 16: Zahnring
- 17: Lager
- 18: Antriebswelle
- 19: Führungsstange
- 20: Halter
- 21: Axiallager
- 22: Wandelement
- 23: Absaugleitung
- 30: Werkstück
- 32: Halter
- 33: Auflage
- 35: Motor
- 40: Schlitten
- 41: Werkzeugträger
- 50: Säge
- 51: Führungsleisten

## Patentansprüche

1. Vorrichtung (1) zur spanenden Bearbeitung eines Werkstückes (30) mit einem rotierend antreibbaren Werkzeug (2, 50) an einem Werkzeugkopf (4), einer an dem Werkzeugkopf (4) angeordneten Absaugvorrichtung (6), die ein um das Werkzeug (2, 50) angeordnete Haube (7) umfasst, wobei an der Haube (7) ein um das Werkzeug (2, 50) drehbares Mundstück (8) angeordnet ist, über das bei einer spanenden Bearbeitung ein Partikelstrom einsaugbar ist, **dadurch gekennzeichnet, dass** eine Oberseite der Haube (7) durch ein an dem Werkzeugkopf (4) gehaltenes Abdeckelement (13) verschlossen ist.

2. Vorrichtung nach Anspruch 1, **dadurch gekennzeichnet, dass** das Werkzeug (2, 50) um eine Achse drehbar ist und das Mundstück (8) relativ zu dem Werkzeug (2, 50) in axialer Richtung bewegbar ist.

3. Vorrichtung nach Anspruch 1 oder 2, **dadurch gekennzeichnet, dass** die Haube (7) eine innere Hülle (10) und eine äußere Hülle (11) umfasst, zwischen denen ein Ansaugkanal (12) ausgebildet ist.

4. Vorrichtung nach Anspruch 3, **dadurch gekennzeichnet, dass** die innere Hülle (10) relativ zu der äußeren Hülle (11) drehbar ist.

5. Vorrichtung nach Anspruch 3 oder 4, **dadurch gekennzeichnet, dass** die innere Hülle (10) und die äußere Hülle (11) in vertikale Richtung relativ zu einem an dem Werkzeugkopf (4) angeordneten Abdeckelement (13) bewegbar sind.

6. Vorrichtung nach Anspruch 5, **dadurch gekennzeichnet, dass** die innere Hülle (10) an mehreren in axiale Richtung bewegbaren Führungsstange (19) gehalten ist.

7. Vorrichtung nach einem der Ansprüche 3-6, **dadurch gekennzeichnet, dass** zwischen der inneren Hülle (10) und der äußeren Hülle (11) ein Axiallager (21) angeordnet ist.

8. Vorrichtung nach einem der Ansprüche 3-7, **dadurch gekennzeichnet, dass** das Mundstück (8) an einem unteren Ring zwischen der inneren Hülle (10) und der äußeren Hülle (11) gehalten ist.

9. Vorrichtung nach einem der vorhergehenden Ansprüche, **dadurch gekennzeichnet, dass** das Mundstück (8) auswechselbar an der Haube (7) fixiert ist.

10. Vorrichtung nach einem der Ansprüche 3-9, **dadurch gekennzeichnet, dass** an der äußeren Hülle (11) eine Absaugleitung (23) angeschlossen ist.

11. Vorrichtung nach einem der vorhergehenden Ansprüche, **dadurch gekennzeichnet, dass** das Mundstück (8) eine zu dem Werkzeug gerichtete Einsaugöffnung (9) aufweist.

12. Vorrichtung nach einem der vorhergehenden Ansprüche, **dadurch gekennzeichnet, dass** an der Haube (7) eine Ausblasdüse vorgesehen ist, mittels der ein Luftstrom zu dem Werkzeug (2) einblasbar ist.

13. Verfahren zur spanenden Bearbeitung eines Werkstückes (30) mit einer Vorrichtung nach Anspruch 1, mit den folgenden Schritten:
- Positionieren des Mundstückes (8) oberhalb des plattenförmigen Werkstückes (30) und Absaugen des Partikelstromes durch die spanende Bearbeitung;
- Drehen des Mundstückes (8) um das Werkzeug (2) abhängig von der Bewegungsrichtung des Werkzeuges (2), und
- Bewegen des Mundstückes (8) neben einer Seitenfläche des plattenförmigen Werkstückes (30) und Absaugen eines Partikelstromes bei der spanenden Bearbeitung der Stirnkante.

## Claims

1. Device (1) for machining a workpiece (30), comprising a rotatably drivable tool (2, 50) on a tool head (4), a suction device (6) arranged on the tool head (4) and having a hood (7) arranged around the tool (2, 50), wherein a mouthpiece (8) rotatable about the tool (2, 50) is arranged on the hood (7), via which mouthpiece (8) a particle stream can be sucked in during machining, **characterized in that** an upper side of the hood (7) is closed by a cover element (13) held on the tool head (4).

2. Device according to claim 1, **characterized in that** the tool (2, 50) is rotatable about an axis and the mouthpiece (8) is movable relative to the tool (2, 50) in axial direction.

3. Device according to claim 1 or 2, **characterized in that** the hood (7) comprises an inner shell (10) and an outer shell (11), between which a suction channel (12) is formed.

4. Device according to claim 3, **characterized in that** the inner shell (10) is rotatable relative to the outer shell (11).

5. Device according to claim 3 or 4, **characterized in that** the inner shell (10) and the outer shell (11) are movable in vertical direction relative to a cover element (13) arranged on the tool head (4).

6. Device according to claim 5, **characterized in that** the inner shell (10) is held on a plurality of guide rods (19) movable in the axial direction.

7. Device according to one of claims 3 to 6, **characterized in that** an axial bearing (21) is arranged between the inner shell (10) and the outer shell (11).

8. Device according to one of claims 3 to 7, **characterized in that** the mouthpiece (8) is held on a lower ring between the inner shell (10) and the outer shell (11).

9. Device according to one of the preceding claims, **characterized in that** the mouthpiece (8) is exchangeably fixed to the hood (7).

10. Device according to one of claims 3 to 9, **characterized in that** a suction line (23) is connected to the outer shell (11).

11. Device according to one of the preceding claims, **characterized in that** the mouthpiece (8) has a suction opening (9) directed towards the tool.

12. Device according to one of the preceding claims, **characterized in that** a blow-out nozzle is provided on the hood (7), by means of which an air stream can be blown in towards the tool (2).

13. Method for machining a workpiece (30) with a device according to claim 1, comprising the steps of:
- positioning the mouthpiece (8) above the plate-shaped workpiece (30) and sucking off the particle stream due to the machining;
- rotating the mouthpiece (8) around the tool (2) depending on the direction of movement of the tool (2), and
- moving the mouthpiece (8) adjacent to a side surface of the plate-shaped workpiece (30) and sucking off a particle stream during machining of the end edge.

## Revendications

1. Dispositif (1) pour l'usinage d'une pièce d'oeuvre (30) par enlèvement de matière avec un outil (2, 50) pouvant être entraîné en rotation sur une tête porte-outil (4), un dispositif d'aspiration (6) disposé sur la tête porte-outil (4) qui comprend une hotte (7) disposée autour de l'outil (2, 50), dans lequel une pièce d'embouchure (8) pouvant tourner autour de l'outil (2,50), par laquelle un flux de particules peut être aspiré pendant l'usinage par enlèvement de matière, est disposée sur la hotte (7), **caractérisé en ce qu'**une face supérieure de la hotte (7) est fermée par un élément de couverture (13) retenu sur la tête porte-outil (4).

2. Dispositif selon la revendication 1, **caractérisé en ce que** l'outil (2, 50) peut tourner autour d'un axe et la pièce d'embouchure (8) est mobile dans le sens axial par rapport à l'outil (2, 50).

3. Dispositif selon la revendication 1 ou 2, **caractérisé en ce que** la hotte (7) comprend une coque intérieure (10) et une coque extérieure (11) entre lesquelles un canal d'aspiration (12) est formé.

4. Dispositif selon la revendication 3, **caractérisé en ce que** la coque intérieure (10) est capable de rotation par rapport à la coque extérieure (11).

5. Dispositif selon la revendication 3 ou 4, **caractérisé en ce que** la coque intérieure (10) et la coque extérieure (11) sont mobiles verticalement par rapport à un élément de couverture (13) disposé sur la tête porte-outil (4).

6. Dispositif selon la revendication 5, **caractérisé en ce que** la coque intérieure (10) est retenue sur plusieurs barres de guidage (19) mobiles dans le sens axial.

7. Dispositif selon l'une des revendications 3 à 6, **caractérisé en ce qu'**un palier axial (21) est disposé entre la coque intérieure (10) et la coque extérieure (11).

8. Dispositif selon l'une des revendications 3 à 7, **caractérisé en ce que** la pièce d'embouchure (8) est retenue sur une bague inférieure entre la coque intérieure (10) et la coque extérieure (11).

9. Dispositif selon l'une des revendications précédentes, **caractérisé en ce que** la pièce d'embouchure (8) est fixée sur la hotte (7) de façon interchangeable.

10. Dispositif selon l'une des revendications 3 à 9, **caractérisé en ce qu'**une conduite d'aspiration (23) est raccordée à la coque extérieure (11).

11. Dispositif selon l'une des revendications précédentes, **caractérisé en ce que** la pièce d'embouchure (8) présente une ouverture d'aspiration (9) dirigée vers l'outil.

12. Dispositif selon l'une des revendications précédentes, **caractérisé en ce qu'**est prévue sur la hotte (7) une buse de soufflage au moyen de laquelle un flux d'air peut être soufflé vers l'outil (2).

13. Procédé pour l'usinage par enlèvement de matière d'une pièce d'œuvre (30) avec un dispositif selon la revendication 1, comprenant les étapes suivantes :
- positionnement de la pièce d'embouchure (8) au-dessus de la pièce d'œuvre (30) en forme de plaque et aspiration du flux de particules résultat de l'usinage par enlèvement de matière ;
- rotation de la pièce d'embouchure (8) autour de l'outil (2) en fonction du sens de déplacement de l'outil (2) et
- déplacement de la pièce d'embouchure (8) près d'une surface latérale de la pièce d'œuvre (30) en forme de plaque et aspiration du flux de particules lors de l'usinage par enlèvement de matière de la face d'extrémité.
